# EUROPÄISCHE PATENTSCHRIFT

(11) **EP 1 923 120 B1**
(45) Veröffentlichungstag und Bekanntmachung des Hinweises auf die Patenterteilung: **05.10.2011**
(21) Anmeldenummer: 07120439.0
(22) Anmeldetag: 12.11.2007
(51) Int. Cl.: B01D 53/04, B01D 53/75, B01D 53/86

(54) **Verfahren und Vorrichtung zur adsorptiv-katalytischen Reinigung von kontaminierten Abluftströmen**
Method and device for adsorptive catalytic cleaning of contaminated discharged air
Procédé et dispositif de purification de flux d'air contaminés par adsorption et catalyse

(30) Priorität: 14.11.2006 DE 102006054299; 22.12.2006 DE 102006062652
(43) Veröffentlichungstag der Anmeldung: 21.05.2008
(73) Patentinhaber: Helmholtz-Zentrum für Umweltforschung GmbH - UFZ, 04318 Leipzig (DE)
(72) Erfinder: ROLAND, Ulf, 04158 Leipzig (DE); KOPINKE, Frank-Dieter, 04109 Leipzig (DE); BUCHENHORST, Daniel, 04299 Leipzig (DE); KRAUS, Markus, 04617 Lödla (DE)
(74) Vertreter: Ziebig, Marlene

(56) Entgegenhaltungen:
- WO-A-99/03565
- US-B1- 6 358 374

## Beschreibung

Die Erfindung betrifft ein Verfahren und eine Vorrichtung zur effizienten Reinigung von kontaminierten Abluftströmen mit den in den Ansprüchen 1 und 10 genannten Merkmalen.

Die Reinigung von mit Schadstoffen belasteten Abluft- und Abgasströmen stellt einerseits ein ökologisches Erfordernis und andererseits einen erheblichen Kostenfaktor im Rahmen technischer Verfahren dar. Der Anwendungsbereich entsprechender Technologien reicht von der Emissionsminderung in der Kunststoffindustrie, der Herstellung, Verarbeitung und Anwendung von Lacken, Farben und Klebstoffen und der industriellen Tierhaltung über den Umgang mit Lösungsmitteln in unterschiedlichen industriellen Verfahren bis hin zu umwelttechnischen Applikationen wie der mechanisch-biologischen und thermischen Abfallbehandlung sowie der Boden- und Grundwassersanierung.

Nach dem Stand der Technik stehen unterschiedliche Verfahren zur Reinigung von Abluft- und Abgasströmen zur Verfügung, die je nach Konzentrations- und Mengenbereich auf adsorptiven, katalytischen, thermischen oder auch biologischen Prinzipien beruhen. Genannt seinen beispielsweise Biofilter, die Verwendung von Adsorbermaterialien wie Aktivkohle und die katalytische Oxidation, die in unterschiedlichen Bereichen der Technik Verbreitung gefunden haben.
Grundsätzlich ergibt sich jedoch nach wie vor eine verfahrenstechnische Lücke für mittlere Schadstoffkonzentrationen, im Fall von Kohlenwasserstoffen als Verunreinigung im Bereich zwischen etwa 0,1 und 2 g/m³. In diesem Konzentrationsbereich arbeiten weder die Adsorption an Aktivkohle noch die katalytische Nachverbrennung effektiv. Im ersten Fall sind angesichts relativ schnell erreichter Beladungskapazitäten ein hoher Verbrauch an Adsorptionsmittel und damit ein häufiger kostspieliger Austausch zu verzeichnen. Im zweiten Fall reicht die Verbrennungswärme der Schadstoffe nicht für eine autotherme Betriebsweise, das heißt, eine Aufrechterhaltung der Arbeitstemperatur des Katalysators ohne externe Heizung oder Zuspeisung eines Brenngases, aus. Aus verfahrenstechnischer Sicht ist auch die bei vielen Anwendungsfällen stark schwankende oder während des Prozesses sich kontinuierlich verändernde Konzentration der Schadstoffe kritisch.

Das Dilemma konventioneller technischer Verfahren kann am Beispiel der Reinigung kontaminierter Abluftströme aus der in-situ-Boden- und Grundwasserreinigung veranschaulicht werden. Dort werden auf Grund der begrenzten Einsatzdauer, die in der Regel nur wenige Monate beträgt, kleinere, flexibel einsetzbare und transportable Reinigungseinheiten benötigt, die in der Lage sind, flüchtige organische Kohlenwasserstoffe über einen weiten Konzentrationsbereich mit hoher Effizienz aus dem Abluftstrom zu entfernen. So werden bei einer Sanierungsmaßnahme mehrere Konzentrationsbereiche mit fallenden Gehalten durchschritten, für die jeweils entweder thermische, thermo-katalytische oder adsorptive Reinigungsverfahren wirtschaftlich einzusetzen sind. Die gleichzeitige Vorhaltung der verschiedenen Abluftreinigungsverfahren ist jedoch genauso wenig praktikabel wie die Umrüstung auf das jeweils effizienteste Verfahren vor Ort. Stattdessen wird nach dem Stand der Technik während der gesamten Sanierungsmaßnahme die abgesaugte Bodenluft entweder mittels Aktivkohle gereinigt, auch wenn die Kohlenwasserstoffkonzentration weit über dem Konzentrationsbereich für einen wirtschaftlichen Betrieb liegt, oder thermo-katalytisch behandelt, selbst dann, wenn die Gehalte für einen autothermen Betrieb der Nachverbrennung zu gering sind. In beiden Fällen entstehen Zusatzkosten: entweder durch den oftmaligen Austausch der Aktivkohle oder durch die erforderliche Aufheizung des Gasstromes.

Ein Verfahren und eine Vorrichtung zur Reinigung eines Gasgemisches ist aus der US 6,358,374 B1 bekannt.

Die Aufgabe der vorliegenden Erfindung besteht darin, ein Verfahren und eine Vorrichtung zur Reinigung eines kontaminierten Gasstromes (bevorzugt Luft oder Sauerstoff) anzugeben, die es erlauben, durch eine Kombination von adsorptiver Aufkonzentrierung, Desorption und Oxidation sowie durch die Initiierung eines durchlaufenden Wärme- und Stoffstrompulses die Nachteile nach dem Stand der Technik zu überwinden und ein Abluftreinigungsverfahren zur Verfügung zu stellen, das insbesondere flexibel in einem weiten Konzentrationsbereich sowie bei schwankenden Schadstoffgehalten einsetzbar ist. Prinzipiell sind neben der Oxidation andere chemische Reaktionen denkbar, die zur Beseitigung oder Umwandlung von Schadstoffen in unschädliche Produkte geeignet sind. Die vorliegende Erfindung ist auch im Zusammenhang mit derartigen Reaktionen anwendbar, die Diskussion wird jedoch aus Gründen der Praxisrelevanz auf die Oxidation fokussiert.

Diese Aufgabe wird erfindungsgemäß gelöst durch die Merkmale im kennzeichnenden Teil des Anspruchs 1 (Verfahrensanspruch) und des Anspruchs 10 (Vorrichtungsanspruch) im Zusammenwirken mit den Merkmalen im Oberbegriff. Zweckmäßige Ausgestaltungen der Erfindung sind in den Unteransprüchen enthalten.

Überraschenderweise wurde gefunden, dass durch die Initiierung eines thermo-chromatographischen Pulses die beschriebenen Effekte der Adsorption, Desorption und Oxidation optimal verbunden werden können. Der Stoff- und Wärmetransport werden so gekoppelt, dass mit nur einem Festbett eine kontinuierliche Abluftreinigung möglich ist, obwohl Adsorptions- und Desorptions-/Reaktionsphasen aufeinander folgen.

Die Erfindung beruht auf der adsorptiven Anreichung der Schadstoffe, der dielektrischen Erwärmung eines Festbettes, welches eine Adsorber- und eine Katalysatorkomponente enthält, der örtlich und zeitlich selektiven Energieeinkopplung mit Hilfe eines Übertragungsmediums, der Initiierung eines mit einem Stofftransport gekoppelten Temperaturpulses sowie der thermo-katalytischen Oxidation der im Gasstrom enthaltenen Schadstoffe. Das Verfahren gliedert sich in zwei grundlegenden Phasen, deren Übergang durch den Eintrag des Übertragungsmediums in das Festbett initiiert wird. In einer ersten Phase werden bei einer Basistemperatur die Schadstoffe adsorptiv aus dem Gasstrom entfernt, und der gereinigte Gasstrom verlässt das Festbett. Im zweiten Verfahrensschritt werden durch das Übertragungsmedium ein höherer dielektrischer Verlust und damit eine lokal verstärkte Aufheizung des Festbettes hervorgerufen. Dies führt sowohl zu einer Desorption der Schadstoffe als auch zu deren chemischer Umsetzung am Katalysator, wodurch wiederum der Abluftstrom in gereinigter Form den Festbettreaktor verlässt.

Das erfindungsgemäße Verfahren basiert auf der Verknüpfung mehrerer Teilschritte in einer solchen Weise, dass kontaminierte Abluftströme mit minimalem Energieaufwand kontinuierlich gereinigt werden können. Dies geschieht prinzipiell durch die Kombination einer Adsorptionsphase und einer Reaktionsphase. Während letzterer findet die Oxidation der Schadstoffe an einem Katalysator statt, wobei unschädliche Reaktionsprodukte, vor allem Wasser und Kohlendioxid, entstehen. Essentielle Bestandteile des Verfahrens sind daneben die dielektrische Erwärmung des Festbettes mit Radiowellen(RW) oder Mikrowellen(MW), und die Realisierung eines gekoppelten Stoff- und Wärmetransportes durch das Festbett in einem thermo-chromatographischen Puls. Die Verfahrensprinzipien und die darauf basierenden Vorrichtungsmerkmale werden im Folgenden näher erläutert.

In einem vom kontaminierten Gasstrom durchströmten Reaktor wird ein Schüttbett positioniert, das mindestens aus einer Adsorber- und einer Katalysatorkomponente besteht. Es kann sich dabei um eine Mischung zweier unterschiedlicher pulverförmiger oder granulierter Materialien handeln, oder es können geträgerte Oxidationskatalysatoren eingesetzt werden. Bevorzugte Adsorbenzien sind Zeolithe, γ-Aluminiumoxid, Aktivkohlen oder andere poröse Feststoffe. Als Katalysatoren werden bevorzugt Perowskite oder Mischoxide sowie Edelmetalle wie Platin eingesetzt. In der Regel liegen die Edelmetalle hochdispers auf einem Trägermaterial (Zeolith, γ-Aluminiumoxid, Silikagel) vor. Die Korngröße der Partikel wird so eingestellt, dass ein ausreichender Kontakt des Gasstromes mit dem Festbettmaterial sichergestellt, andererseits aber die Durchströmung des Festbettes nicht signifikant behindert wird.

Während der ersten Phase, der Adsorptionsphase, wird die Temperatur des Festbettes auf einem relativ niedrigen Wert gehalten. Entweder ist dies die Umgebungstemperatur, so dass in dieser Phase keine externe Heizung notwendig ist, oder diese Temperatur wird durch eine moderate konventionelle oder dielektrische Erwärmung, vorzugsweise mit Radiowellen, realisiert. In einer bevorzugten Variante des Verfahrens ist bei dieser Temperatur, die im Folgenden als Basistemperatur bezeichnet wird, eine ausreichende Adsorption am Adsorbermaterial vorhanden, so dass der Gasstrom bis auf eine tolerable Restkonzentration an Schadstoffen abgereichert wird. Vorzugsweise ist der Katalysator bei der Basistemperatur nicht aktiv, das heißt, während der Adsorptionsphase findet keine signifikante Oxidation der Schadstoffe am Katalysator statt. Dies hat den Vorteil, dass während dieser Phase keine unerwünschte, die Adsorption einschränkende Erwärmung des Festbettes durch die Freisetzung der Oxidationswärme eintritt. Analog gilt die Betrachtung für andere chemische Reaktionen.

Die Dauer der Adsorptionsphase wird durch die prozesstechnisch bedingte Beladungskapazität des Festbettes bestimmt. Aus Sicherheitsgründen wird die Adsorptionsphase in der Regel vor Erreichen des Durchbruchs der Kontaminanten abgebrochen. Dies bedeutet, dass die Adsorptionskapazität nicht vollständig ausgeschöpft wird. Während dies bei konventionellen Verfahren eine gewisse Einschränkung darstellt, da die Abluftreinigung mittels des betreffenden Festbettes unterbrochen werden muss, ist bei dem erfindungsgemäßen Verfahren durch die Möglichkeit einer kontinuierlichen Reinigung des Abgasstromes mittels nur *eines* Festbettes damit praktisch kein verfahrenstechnischer Nachteil verbunden.

Der Übergang zur zweiten Phase, in der die Regeneration des Festbettes und die Wiederherstellung der Beladungskapazität erfolgen, wird durch das Einbringen des Übertragungsmediums in das Festbett realisiert. Dies kann durch die Dosierung über den Gasstrom, mittels Direktinjektion oder in sonstiger geeigneter Weise geschehen. In besonders bevorzugten Varianten des Verfahrens werden Wasser als Übertragungsmedium eingesetzt und/oder eine Direktinjektion am Reaktoreingang in flüssiger Form durchgeführt. Durch den verfahrenstechnischen Schritt der Injektion des Übertragungsmediums wird eine bevorzugte Energieabsorption im Festbett initiiert, die wiederum zur Ausbildung eines kombinierten Temperatur- und Stofftransportpulses auf Grund des thermo-chromatographischen Effektes führt. Durch die vom Übertragungsmedium vermittelte Temperaturerhöhung findet eine Aktivierung des Katalysators (bzw. der katalytisch aktiven Komponente) statt, wodurch der sich im Trägergas befindende bzw. im Festbett gepeicherte Schadstoff oxidiert wird. Spitzentemperatur im Puls und Katalysator sind so aufeinander abzustimmen, dass eine Totaloxidation der Kontaminanten zu unschädlichen Produkten wie beispielsweise Kohlendioxid und Wasser im Fall von Kohlenwasserstoffen sichergestellt ist.
Die Temperaturerhöhung führt außerdem zu einer kontinuierlichen Desorption der Schadstoffe aus dem Festbett, so dass sie über den Trägergasstrom an den Katalysator herangeführt werden können. Der Effekt wird durch die Reaktionswärme der exothermen Oxidation noch verstärkt. Während der Regenerationsphase werden also, vermittelt durch einen kombinierten Temperatur- und Stofftransportpuls, die Schadstoffe desorbiert und am Katalysator oxidiert sowie die Reaktionsprodukte mit dem Gasstrom aus dem Reaktor geführt. Diese Phase kann somit auch als Desorptions- und Oxidationsphase bezeichnet werden. Die während dieser Phase im Gasstrom neu zugeführten Schadstoffe werden sofort oxidiert, bis der Reaktoreingang sich soweit abgekühlt hat, dass erneut eine bevorzugte Adsorption stattfindet. Dieses Kriterium definiert den erneuten Übergang zur Adsorptionsphase.
Ein wesentlicher Vorteil des erfindungsgemäßen Verfahrens besteht somit darin, dass über nur einen Festbettreaktor der Trägergasstrom kontinuierlich gereinigt werden kann. Es sind keine Unterbrechung der Gasreinigung oder das Umschalten von Gasströmen zwischen verschiedenen Apparaten notwendig.

Das erfindungsgemäße Verfahren zur Reinigung eines Gasgemisches, welches mindestens ein Trägergas und mindestens einen Schadstoff enthält, weist folgende Verfahrensschritte auf: 1) Einführen des Gasgemisches in ein Feststoffbett, wobei das Feststoffbett mindestens eine Adsorber- und mindestens eine Katalysator-Komponente enthält; 2) Adsorption des mindestens einen Schadstoffs im Feststoffbett; 3) dielektrische Erwärmung des Feststoffbettes mittels elektromagnetischer Strahlung; 4) Einbringen eines Übertragungsmediums in das Feststoffbett, wobei das Übertragungsmedium zumindest einen Teil der elektromagnetischen Strahlung absorbiert; 5) zumindest teilweise Desorption und zumindest teilweise Oxidation des mindestens einen Schadstoffs; und 6) Abführen des gereinigten Trägergases und der Oxidationsprodukte des Schadstoffes aus dem Feststoffbett. Das verbindende Element der einzelnen Verfahrensschritte ist die Initiierung eines gekoppelten Stoff- und Energieflusses, des so genannten thermo-chromatographischen Pulses, wobei das Übertragungsmedium erfindungsgemäß nicht-kontinuierlich (bzw. diskontinuierlich) in das Feststoffbett eingebacht wird. Alternativ zur Oxidation kann jedoch auch eine andere chemische Reaktion durch die Temperaturerhöhung initiiert werden. Vorzugsweise ist dies eine heterogen katalysierte Reaktion und vorzugsweise wird der Katalysator durch die erzielte Temperaturerhöhung aktiviert. Die Punkte 5) und 6) beziehen sich im allgemeinen Fall dann auf *Reaktion* des mindestens einen Schadstoffs bzw. das Abführen der *Reaktionsprodukte.*

Vorzugsweise ist die Reaktion eine Oxidation. Vorzugsweise wird durch das Einbringen des Übertragungsmediums der dielektrische Verlustfaktor im entsprechenden Feststoffbettvolumen um mindestens den Faktor 2 erhöht, wodurch eine verstärkte Erwärmung des Feststoffbettes in einem Bereich, in dem sich das Übertragungsmedium befindet, stattfindet. Vorzugsweise wird das Gasgemisch kontinuierlich in das Feststoffbett eingeführt und das gereinigte Trägergas wird kontinuierlich aus dem Feststoffbett abgeführt. Vorzugsweise werden die Reaktionsprodukte des Schadstoffes intervallweise aus dem Feststoffbett abgeführt.

Die Erhöhung der Energieabsorption durch das Übertragungsmedium führt auf Grund seiner Wechselwirkung mit dem Feststoffbett zu einer verstärkten dielektrischen Erwärmung und zur verstärkten Aufheizung des entsprechenden Volumenelementes, in dem sich das Übertragungsmedium befindet.

Vorzugsweise wird das Übertragungsmedium innerhalb des Feststoffbettes mit der mindestens einen adsorptionsaktiven Komponente (Adsorbens) und der mindestens einen katalytisch aktiven Komponente (Katalysator) derart in Kontakt gebracht, dass das Übertragungsmedium zumindest einen Teil der Wärme, die durch die Absorption der elektromagnetischen Strahlung entstanden ist, an das mindestens eine Adsorbens und den mindestens einen Katalysator abgibt. Vorzugsweise wird der Gasstrom, der den mindestens einen Schadstoff enthält, kontinuierlich in das Feststoffbett eingeführt. Vorzugsweise wird das gereinigte Trägergas ebenfalls kontinuierlich aus dem Feststoffbett abgeführt. Damit ergibt sich in einer bevorzugten Betriebsweise eine kontinuierliche Abluftreinigung durch nur ein Feststoffbett, das sowohl eine Adsorber- als auch eine Katalysatorkomponente enthält.

Vorzugsweise wird das Übertragungsmedium in definierten Intervallen in das Feststoffbett eingebacht. Vorzugsweise wird das Übertragungsmedium alle 2 bis 60 Minuten, vorzugsweise alle 10 bis 30 Minuten, eingebracht. In einer anderen bevorzugten Variante wird das Übertragungsmedium in Abhängigkeit von einem prozessrelevanten Parameter injiziert. Dies kann beispielsweise die erreichte Beladung des Feststoffbettes in Relation zur Beladungskapazität sein.

In einer bevorzugten Variante wird das Übertragungsmedium durch Direktinjektion in das Feststoffbett eingebracht. In diesem Fall erfolgt die Einbringung des Übertragungsmediums innerhalb einer Zeitspanne von vorzugsweise weniger als 90 s (bevorzugter 20 s oder weniger und noch bevorzugter 2 s oder weniger). Die entsprechenden Zeiten sind von der zu dosierenden Menge des Übertragungsmediums und vom Volumen des Feststoffbettes abhängig.

In einer anderen bevorzugten Variante wird das Übertragungsmedium über das zugeführte Gasgemisch dosiert, bis die zu erzielende Menge erreicht ist.

Vorzugsweise wird Wasser als Übertragungsmedium verwendet.

Vorzugsweise wird das Übertragungsmedium in das Feststoffbett eingebacht, wenn die Beladung des Feststoffbettes in Bezug auf die Adsorptionskapazität für den jeweiligen Schadstoff mindestens 50 % (bevorzugter 75 %, noch bevorzugter über 90 %) erreicht hat. Die zu erzielende Grenzbeladung ist jedoch auch davon abhängig, inwieweit unter den entsprechenden Bedingungen eine vollständige Umsetzung des Schadstoffes am Katalysator gewährleistet werden kann. Außerdem ist die Grenzbeladung so zu wählen, dass durch die freigesetzte Reaktionswärme bei der Umsetzung des Kontaminanten keine kritischen Prozessbedingungen erreicht werden.

Vorzugsweise wird die Menge des eingebrachten Übertragungsmediums derart gewählt, dass eine Aktivierung der mindestens einen Katalysatorkomponente erfolgt und dass mindestens 50 % (bevorzugter 80 %, noch bevorzugter 95 %) des vorher adsorbierten Schadstoffes oxidiert oder anderweitig reaktiv umgesetzt werden. Die Wahl der konkreten Bedingungen hängt auch davon ab, welche Grenzwerte im Abluftstrom bezüglich des Schadstoffes erreicht werden müssen. Vorzugsweise wird jedoch der mindestens eine Schadstoff vollständig oxidiert oder anderweitig in unschädliche Produkte umgesetzt.

Vorzugsweise enthält das Feststoffbett adsorbierende Materialien, wobei besonders bevorzugt Zeolithe unterschiedlichen Typs (besonders bevorzugt NaY-Zeolith oder KA-Zeolith), γ-Aluminiumoxid oder andere poröse Metalloxide, Silikagel und/oder Aktivkohle eingesetzt werden. Vorzugsweise werden Perowskite, andere oxidische Materialien, Übergangsmetalle und/oder Edelmetalle als Katalysator verwendet. Besonders bevorzugt ist der Einsatz von Platin als Katalysatorkomponente. Die Übergangs- und/oder Edelmetalle werden vorzugsweise in hochdisperser Form auf einem Träger eingesetzt.

Die Erwärmung des Feststoffbettes erfolgt mittels Radiowellen oder Mikrowellen mit Frequenzen des angewandten elektromagnetischen Feldes zwischen 100 kHz und 50 GHz. Darunter sind insbesondere Frequenzen im Bereich zwischen 5 und 50 MHz bevorzugt.

Die erfindungsgemäße Vorrichtung zur Durchführung des erfindungsgemäßen Verfahrens weist folgende Bestandteile auf: ein Feststoffbett, das mit einem Mittel zur Erwärmung des Feststoffbettes verbunden ist, wobei das Mittel zur Erwärmung des Feststoffbettes durch mindestens eine zur dielektrischen Erwärmung geeignete Elektrode oder eine Einrichtung zum Einbringen von Mikrowellen ausgebildet ist, und das Feststoffbett mindestens eine sorptionsaktive und mindestens eine katalytisch aktive Komponente aufweist, wobei das Feststoffbett mit einem Mittel zum Einströmen eines Gasgemisches in das Feststoffbett, wobei das Gasgemisch mindestens ein Trägergas und (zumindest zeitweise) mindestens einen Schadstoff aufweist, und einem Mittel zum Ausströmen des gereinigten Trägergases und der Reaktionsprodukte aus der Umsetzung des Schadstoffes aus dem Feststoffbett verbunden ist, wobei das Feststoffbett zusätzlich mit einem Mittel zum Einbringen eines Übertragungsmediums zur Initiierung eines das Feststoffbett durchlaufenden gekoppelten Wärme- und Stoffstrompulses (so genannter thermo-chromatographischer Puls) verbunden ist.

Bevorzugte sorptionsaktive Komponenten sind Zeolithe unterschiedlicher Struktur (besonders bevorzugt NaY-Zeolith oder KA-Zeolith), γ-Aluminiumoxid oder andere poröse Metalloxide, Silikagel und/oder Aktivkohle. Bevorzugte einsetzbare Oxidationskatalysatoren sind Perowskite oder andere oxidische Materialien, Übergangsmetalle und/oder Edelmetalle. Ein besonders bevorzugter Katalysator enthält Platin. In einer bevorzugten Variante werden geträgerte, hochdisperse Metallkatalysatoren eingesetzt.

In bevorzugten Varianten weist das Mittel zum Einbringen eines Übertragungsmediums eine Einspritzvorrichtung für eine Flüssigkeit oder eine Dosiereinrichtung auf.

Vorzugsweise wird mindestens eine Elektrode zur Erzeugung eines elektromagnetischen Feldes im Feststoff mittels eines Hochfrequenzgenerators gespeist. Vorzugsweise ist das Feststoffbett zwischen mindestens zwei zur dielektrischen Erwärmung geeigneten Elektroden angeordnet. In einer besonders bevorzugten Variante sind die Elektroden so ausgebildet, dass das elektrische Feld im Feststoffbett die größtmögliche Homogenität aufweist. Eine bevorzugte Ausführungsvariante sind zwei parallele Plattenelektroden, zwischen denen sich das Feststoffbett befindet. Vorzugsweise sind beide Elektroden über ein elektronisches Anpassnetzwerk mit einem HF-Generator verbunden, wobei eine der Elektroden wiederum geerdet ist. Vorzugsweise sind das Feststoffbett und die mindestens zwei zur dielektrischen Erwärmung geeigneten Elektroden innerhalb eines Abschirmgehäuses angeordnet oder eine dieser Elektroden bildet einen Teil des Abschirmgehäuses. Vorzugsweise weist das Mittel zum Einströmen eines Gasgemisches eine Dosiervorrichtung, einen Gasanalysator und/oder einen Gasfeuchtesensor auf. Vorzugsweise weist das Mittel zum Ausströmen des Gasgemisches einen Durchflussmesser, einen Gasanalysator und/oder einen Gasfeuchtesensor auf. Vorzugsweise weist die Vorrichtung mindestens einen Temperatursensor zur Messung der Temperatur des Feststoffbettes im Anstrombereich und/oder im Abstrombereich und/oder in einem übrigen Bereich des Feststoffbettes auf. In einer besonders bevorzugten Variante ist der Temperatursensor ein faseroptischer Sensor mit der Möglichkeit einer kontinuierlichen Messung in elektromagnetischen Feldern. Vorzugsweise weist die Vorrichtung ein Mittel zur Bestimmung der Beladung des Feststoffbettes in Bezug auf die Adsorptionskapazität des Schadstoffes auf. Vorzugsweise weist das Mittel zur Bestimmung der Beladung des Feststoffbettes eine Verbindung zu einem Datenverarbeitungs-/Steuergerät auf, das darüber hinaus mit dem HF-Generator, dem mindestens einen Temperatursensor, den Gasanalysatoren und den Gasfeuchtesensoren verbunden ist.

In einer anderen bevorzugten Variante wird an Stelle des HF-Generators eine MW-Generator verwendet. Das Elektrodensystem wird dann vorzugsweise durch ein geeignetes System zur Einspeisung von Mikrowellen ersetzt.

Die Erfindung wird nachstehend anhand von Ausführungsbeispielen näher erläutert.

Es zeigen:
- Fig. 1:: eine schematische Darstellung einer erfindungsgemäßen Vorrichtung zur Reinigung von kontaminierten Abluftströmen,
- Fig. 2:: die mit der in Fig. 1 gezeigten Vorrichtung erzielten Messergebnisse (Temperaturen, Massefluss und Gaskonzentrationen) während eines kompletten Durchgangs des Übertragungsmediums durch das Feststoffbett (infolge von wiederholter Adsorption, Desorption, Transport des Übertragungsmediums durch das Feststoffbett sowie Oxidation des Schadstoffs) bei konstanter Schadstoffkonzentration im einströmenden Trägergas nach einem ersten exemplarischen Ausführungsbeispiel des erfindungsgemäßen Verfahrens,

- Fig. 3:: die während der Desorptions-/Oxidationsphase detektierten Temperaturen innerhalb des U-Rohr-förmigen Feststoffbettes sowie die damit einhergehende Detektion des Temperaturpulses,
- Fig. 4:: die mit der in Fig. 1 gezeigten Vorrichtung erzielten Messergebnisse (Temperaturen, Massefluss und Gaskonzentrationen) mit 5 kompletten Durchgängen des Übertragungsmediums durch das Feststoffbett (infolge von wiederholter Adsorption, Desorption, Transport des Übertragungsmediums durch das Feststoffbett sowie Oxidation des Schadstoffs) bei konstanter Schadstoffkonzentration im einströmenden Trägergas nach einem zweiten exemplarischen Ausführungsbeispiel des erfindungsgemäßen Verfahrens, und
- Fig. 5:: die mit der in Fig. 1 gezeigten Vorrichtung erzielten Messergebnisse (Temperaturen, Massefluss und Gaskonzentrationen) bei variierender Schadstoffkonzentration im einströmenden Trägergas nach einem dritten exemplarischen Ausführungsbeispiel des erfindungsgemäßen Verfahrens.

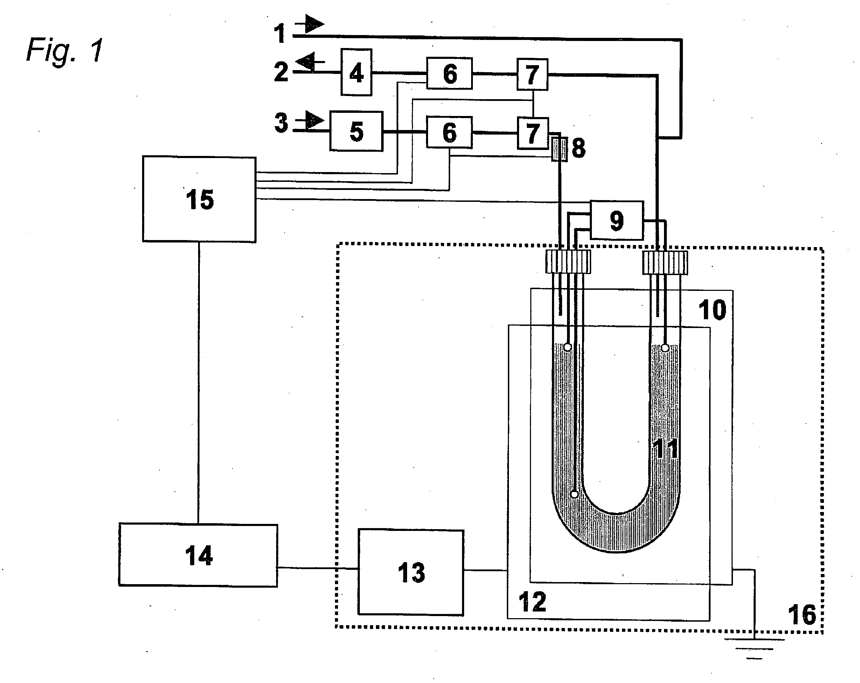

Fig. 1 zeigt eine schematische Darstellung einer erfindungsgemäßen Vorrichtung zur Reinigung von kontaminierten Abluftströmen.

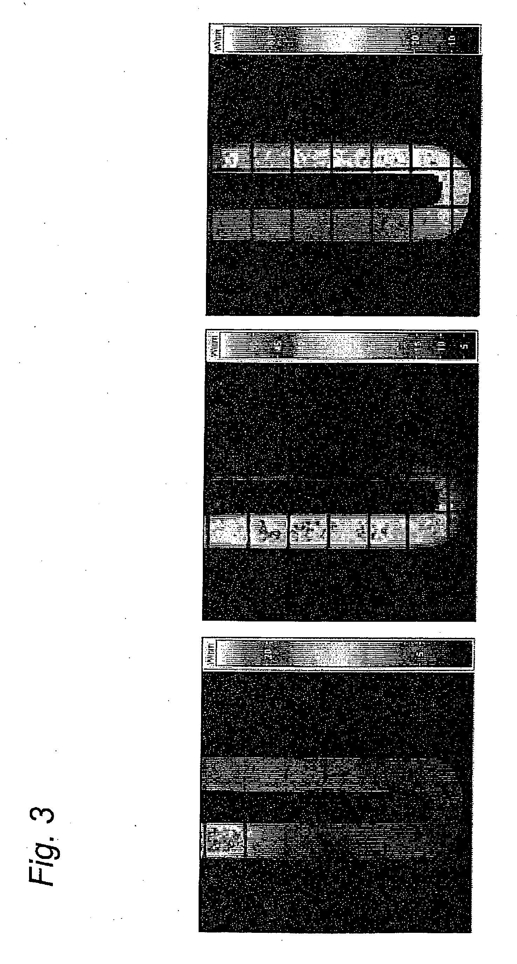

In einer Versuchsanordnung zur Radiowellen-Erwärmung (Arbeitsfrequenz 13,56 MHz) gemäß Fig. 1 wurde ein Schüttbett (Feststoffbett 11) zwischen zwei parallele Elektroden 10, 12 eingebracht. Das Festbett 11 bestand aus einem Pt/NaY-Zeolith in Partikelform (mittlerer Teilchendurchmesser ca. 2 mm), der sowohl Adsorptions- als auch katalytische Eigenschaften besaß. Die Elektrode 12 ist mit einem elektronischen Anpassnetzwerk 13 und einem HF-Generator 14 verbunden, welcher mit einem Leitsystem 15 verbunden ist. Die andere Elektrode 10 ist geerdet. Das Feststoffbett 11 weist einen Zustrombereich und einen Abstrombereich auf. Die kontaminierte Zuluft wird über eine Leitung 3, an die eine Dosiervorrichtung 5, ein Gasanalysator 6 und ein Gasfeuchtesensor 7 angeschlossen sind, und über den Zustrombereich in das Feststoffbett 11 geleitet. Die gereinigte Luft wird über den Abstrombereich und über eine Leitung 2, an die ein Durchflussmesser 4, ein Gasanalysator 6 und ein Gasfeuchtesensor 7 angeschlossen sind, aus dem Feststoffbett 11 geleitet. Das Feststoffbett 11 ist im vorliegenden Ausführungsbeispiel U-Rohr-förmig ausgebildet (siehe insbesondere Fig. 3), jedoch ist die Erfindung nicht darauf beschränkt. Es ist vielmehr jede Art von Feststoffbett mit einem Zustrombereich und einem Abstrombereich denkbar.

Das Schüttbett 11 wurde von einem Gas (trockene Luft mit einem Fluss von 140 ml/min) durchströmt, welches nach Bedarf mit einem Modellschadstoff, im vorliegenden Fall Toluol, kontaminiert wurde. Die Kohlenwasserstoffkonzentration, der CO₂-Gehalt und die Feuchte wurden sowohl vor als auch nach dem Festbettreaktor (mittels 6, 7) gemessen. Im Schüttbett 11 befanden sich an unterschiedlichen Stellen faseroptische Temperatursensoren 9. Zusätzlich wurde der räumliche und zeitliche Verlauf der Temperaturen an der Partikeloberfläche im Schüttbett durch eine als Netz ausgelegte Elektrode hindurch mit einer Thermokamera verfolgt.

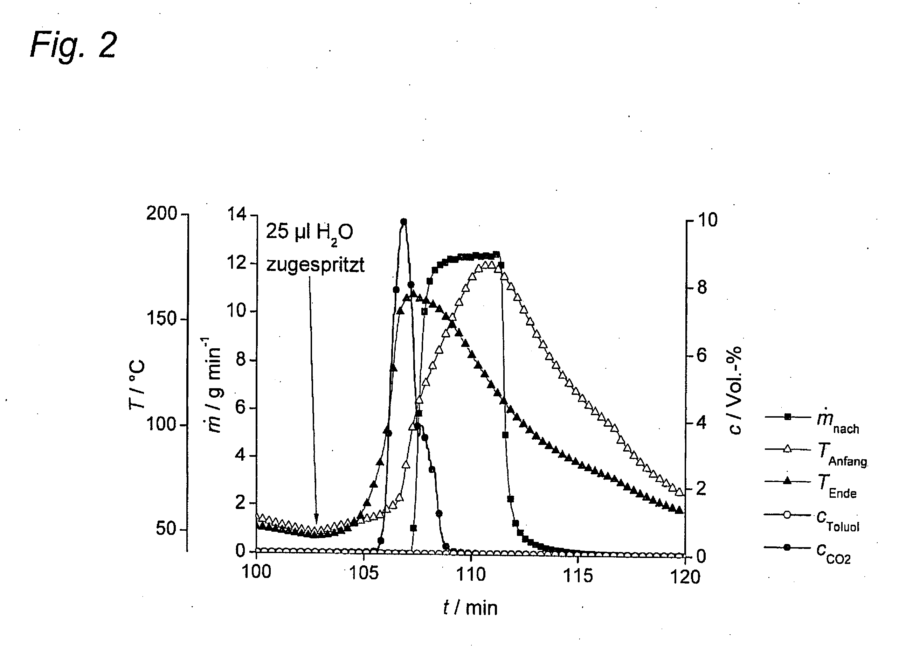

Während der Adsorptionsphase wurde das Schüttbett 11 für 5 min mit einem toluolhaltigen Gasstrom (Toluolkonzentration 0,9 Vol.-%) beladen. Während dieser Zeit war im Abstrom praktisch kein Toluol zu detektieren (Restkonzentration < 0,005 Vol.-%). Der Übergang zur Desorptions- und Oxidationsphase wurde durch die Injektion von 25 µl Wasser induziert. Im Ergebnis war ein das Schüttbett durchlaufender Temperaturpuls zu verzeichnen, der zur Desorption des Toluols und zu dessen Oxidation am Katalysator führte. Dies wurde durch die Messung des Reaktionsproduktes Kohlendioxid im Abluftstrom nachgewiesen. Die Messergebnisse (Temperaturen und Gaskonzentrationen) sind in Fig. 2 zusammengefasst. Exemplarisch sind die mittels Thermokamera gemessenen Temperaturprofile zu unterschiedlichen Versuchszeiten (3, 9 und 14 min) in Fig. 3 dargestellt.

In den Fig. 3-5 repräsentiert *ṁ*_{nach} den Massestrom des Übertragungsmediums (Wasser) im Abstrom, T_{anfang} repräsentiert die Temperatur des Feststoffbettes 11 im Zustrombereich, T_{Ende} repräsentiert die Temperatur des Feststoffbettes 11 im Abstrombereich, P_{eingebracht} repräsentiert die mittels der Elektroden eingebrachte Leistung zur dielektrischen Erwärmung, c_{Toluol} bzw. c_{Toluol nach} repräsentieren die Konzentrationen von Toluol im gereinigten Gasstrom, c_{Toluol vor} repräsentiert die Konzentration von Toluol im zu reinigenden Gasstrom und c_{CO2} repräsentiert die Konzentration von CO₂ im gereinigten Gasstrom.

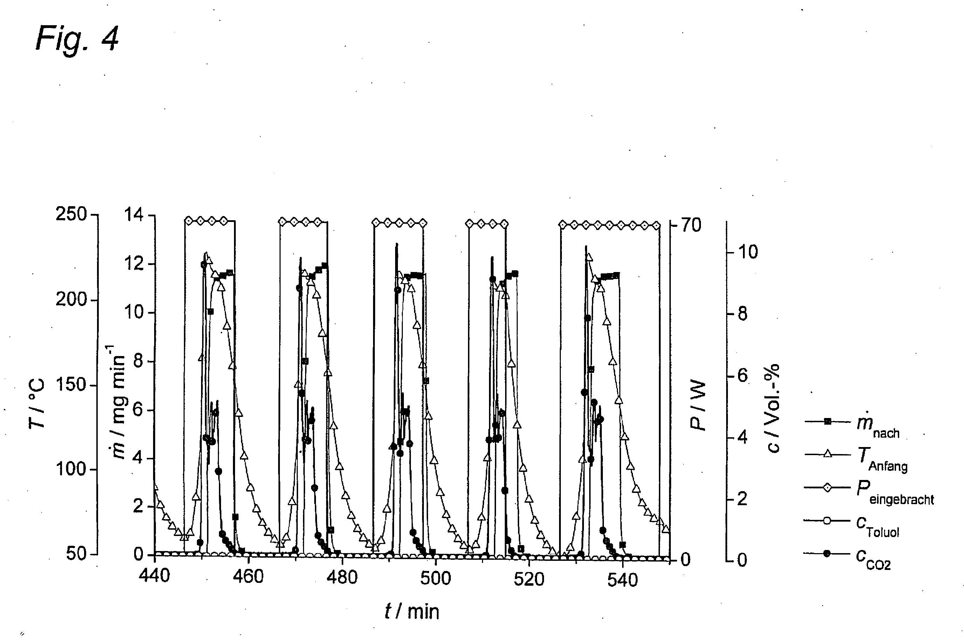

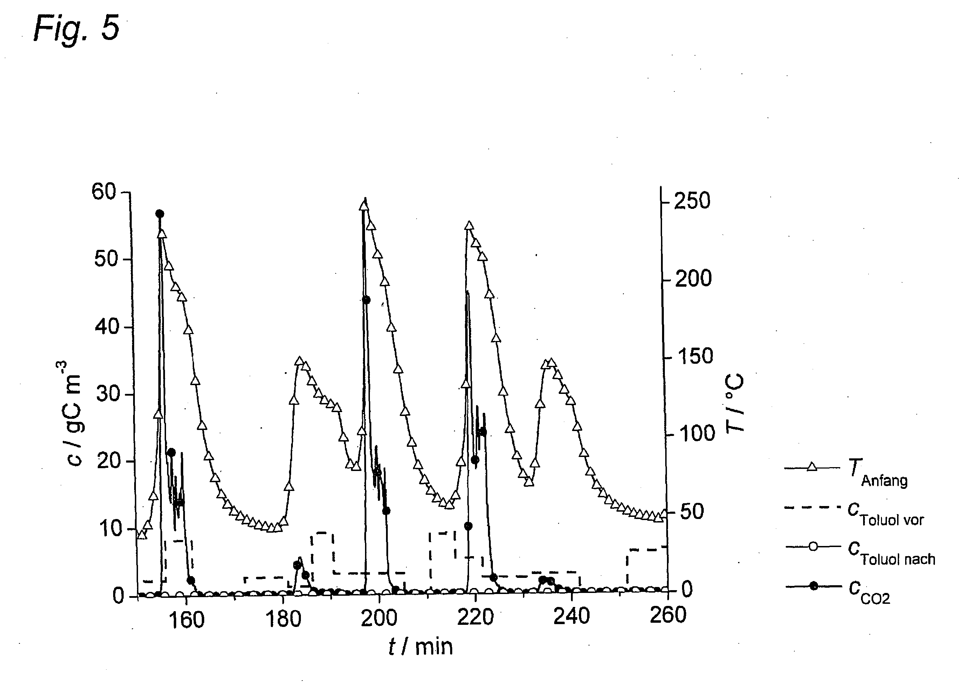

Ein Experiment mit Durchlaufen mehrerer Zyklen von Adsorptions- und Regenerationsphasen wurde an derselben in Fig. 1 dargestellten Apparatur ebenfalls mit Toluol als Modellschadstoff durchgeführt. Fig. 4 gibt einen Überblick über die Konzentrations- und Temperaturverläufe bei mehrmaliger Beladung mit Toluol über den Gasstrom und Regeneration unter Ausnutzung des thermo-chromatographischen Effektes, wobei wieder Wasser (Injektion von jeweils 25 µl pro Puls) als Übertragungsmedium fungierte. Die eingestrahlte Radiowellenleistung (RW-Frequenz 13,56 MHz) während der Desorptions- bzw. Oxidationsphase betrug ca. 70 W.
Durch den Versuch konnte die Möglichkeit einer kontinuierlichen Betriebsweise mit Sicherstellung einer adäquaten Abluftreinigung verifiziert werden. Das als Modellkohlenwasserstoff eingesetzte Toluol wurde während des gesamten Versuches entweder durch Adsorption oder durch oxidative Umsetzung vollständig aus dem Luftstrom entfernt. In einem weiteren Beispiel, das in Fig. 5 dargestellt ist, wurde die Toluolkonzentration im Trägergasstrom während des Versuches mehrfach verändert. Damit wurden reale Betriebsbedingungen mit schwankenden Schadstoffgehalten simuliert.

### Bezugszeichenliste

- 1: Verdünnungsgas
- 2: Gereinigte Abluft
- 3: Kontaminierte Zuluft
- 4: Durchflussmesser
- 5: Dosiervorrichtung
- 6: Gasanalysator
- 7: Sensor für Gasfeuchte
- 8: Wasser-Direkteinspritzung
- 9: faseroptische Temperatursensoren
- 10: "kalte" Elektrode
- 11: Feststoffbett/Schüttbett
- 12: "heiße" Elektrode
- 13: Elektronisches Anpassungsnetzwerk
- 14: HF-Generator
- 15: Leitsystem-PC mit Datenaufnahme
- 16: Abschirmgehäuse

## Patentansprüche

1. Verfahren zur Reinigung eines Gasgemisches (3), welches mindestens ein Trägergas und mindestens einen Schadstoff aufweist, mit folgenden Verfahrensschritten:
- Einführen des Gasgemisches in ein Feststoffbett (11), wobei das Feststoffbett (11) mindestens eine adsorptionsaktive Komponente und mindestens eine katalytisch aktive Komponente aufweist,
- Adsorption des mindestens einen Schadstoffs im Feststoffbett (11),
- dielektrische Erwärmung (10, 12) des Feststoffbettes (11) mittels elektromagnetischer Strahlung, wobei zur dielektrischen Erwärmung Radiowellen und/oder Mikrowellen im Bereich zwischen 100 kHz und 50 GHz verwendet werden,
- Einbringen eines Übertragungsmediums (8) in das Feststoffbett (11), wobei das Übertragungsmedium die Absorption der elektromagnetischen Strahlung erhöht,
- zumindest teilweise Desorption und zumindest teilweise Reaktion des mindestens einen Schadstoffs, und
- zumindest teilweises Abführen (2) des gereinigten Trägergases und der Reaktionsprodukte des Schadstoffes aus dem Feststoffbett (11),
**dadurch gekennzeichnet, dass**
das Übertragungsmedium (8) diskontinuierlich in das Feststoffbett (11) eingebracht wird, ein mit einem Stofftransport gekoppelter Temperaturpuls initiiert wird, der das Feststoffbett (11) durchwandert,
und das Gasgemisch (3) kontinuierlich in das Feststoffbett (11) eingeführt sowie das gereinigte Trägergas (2) kontinuierlich aus dem Feststoffbett (11) abgeführt werden.

2. Verfahren nach Anspruch 1,
**dadurch gekennzeichnet, dass**
die Reaktion eine Oxidation ist.

3. Verfahren nach einem der vorhergehenden Ansprüche,
**dadurch gekennzeichnet, dass**
das Übertragungsmedium intervallweise in das Feststoffbett (11) eingebracht wird.

4. Verfahren nach Anspruch 3,
**dadurch gekennzeichnet, dass**
das Übertragungsmedium alle 2 bis 60 Minuten in das Feststoffbett (11) eingebracht wird.

5. Verfahren nach einem der vorhergehenden Ansprüche,
**dadurch gekennzeichnet, dass**
die Einbringung des Übertragungsmediums (8) innerhalb einer Zeitspanne von 90 s erfolgt.

6. Verfahren nach einem der vorhergehenden Ansprüche,
**dadurch gekennzeichnet, dass**
das Übertragungsmedium durch Direkteinspritzung in das Feststoffbett (11) eingebracht wird.

7. Verfahren nach einem der vorhergehenden Ansprüche,
**dadurch gekennzeichnet, dass**
Zeolith, γ-Aluminiumoxid, poröse Metalloxide, Silikagel und/oder Aktivkohle als adsorptionsaktive Komponente verwendet wird.

8. Verfahren nach einem der vorhergehenden Ansprüche,
**dadurch gekennzeichnet, dass**
ein Perowskit, ein Oxid, ein Übergangsmetall und/oder ein Edelmetall als katalytisch aktive Komponente verwendet wird.

9. Verfahren nach einem der vorhergehenden Ansprüche,
**dadurch gekennzeichnet, dass**
Wasser als Übertragungsmedium (8) verwendet wird.

10. Vorrichtung zur Durchführung des Verfahrens nach einem der Ansprüche 1-9, aufweisend:
ein Feststoffbett (11), das mit einem Mittel zur dielektrischen Erwärmung des Feststoffbettes (11) verbunden ist, wobei das Mittel zur dielektrischen Erwärmung des Feststoffbettes (11) durch mindestens eine zur dielektrischen Erwärmung geeignete Elektroden (10, 12) und/oder eine Einrichtung zum Eintrag von Mikrowellen ausgebildet ist, und das Feststoffbett (11) mindestens eine adsorbierende Komponente und mindestens eine katalytisch aktive Komponente aufweist, wobei das Feststoffbett (11) mit einem Mittel (3) zum Einströmen eines Gasgemisches in das Feststoffbett (11), wobei das Gasgemisch mindestens ein Trägergas und mindestens einen Schadstoff aufweist, und einem Mittel (2) zum Ausströmen des gereinigten Trägergases und der Reaktionsprodukte des Schadstoffes aus dem Feststoffbett (11) verbunden ist, wobei das Feststoffbett (11) zusätzlich mit einem Mittel zum diskontinuierlichen Einbringen eines Übertragungsmediums (8) zur Initiierung eines das Feststoffbett (11) durchlaufenden Wärme- und Stoffstrompulses verbunden ist
**dadurch gekennzeichnet, dass**
das Gasgemisch kontinuierlich in das Feststoffbett (11) eingeführt und das gereinigte Trägergas kontinuierlich aus dem Feststoffbett (11) abgeführt werden.

11. Vorrichtung nach Anspruch 10,
**dadurch gekennzeichnet, dass**
die Vorrichtung ein Mittel zur periodischen Einbringung des Übertragungsmediums (8) aufweist.

12. Vorrichtung nach einem der Ansprüche Anspruch 10-11,
**dadurch gekennzeichnet, dass**
das Mittel zum Einbringen eines Übertragungsmediums eine Einspritzvorrichtung für eine Flüssigkeit aufweist.

13. Vorrichtung nach einem der Ansprüche 10-12,
**dadurch gekennzeichnet, dass**
mindestens eine der zur dielektrischen Erwärmung geeigneten Elektroden (10) mit einem Hochfrequenzgenerator (14) verbunden ist.

14. Vorrichtung nach einem der Ansprüche 10-13,
**dadurch gekennzeichnet, dass**
das Mittel (3) zum Einströmen eines Gasgemisches eine Dosiervorrichtung (5) und/oder einen Gasanalysator (6) und/oder einen Gasfeuchtesensor (7) aufweist.

15. Vorrichtung nach einem der Ansprüche 10-14,
**dadurch gekennzeichnet, dass**
das Mittel (2) zum Ausströmen des Gasgemisches einen Durchflussmesser (4) und/oder einen Gasanalysator (6) und/oder einen Gasfeuchtesensor (7) aufweist.

16. Vorrichtung nach einem der Ansprüche 10-15,
**dadurch gekennzeichnet, dass**
die Vorrichtung einen Temperatursensor (9) zur Messung der Temperatur des Feststoffbettes (11) im Anstrombereich und/oder im Abstrombereich aufweist.

17. Vorrichtung nach einem der Ansprüche 10-16,
**dadurch gekennzeichnet, dass**
die Vorrichtung ein Mittel zur Bestimmung der Beladung des Feststoffbettes (11) in Bezug auf die Adsorption des Schadstoffes aufweist.

## Claims

1. A method for purifying a gas mixture (3) containing at least one carrier gas and at least one pollutant, said method including the following steps:
- feeding the gas mixture into a solid bed (11), said solid bed (11) having at least one adsorption-active component and at least one catalytically active component,
- adsorption of said at least one pollutant in said solid bed (11),
- dielectric heating (10, 12) of the solid bed (11) by means of electromagnetic radiation, said dielectric heating involving the use of radio waves and/or microwaves in the range of between 100 kHz and 50 GHz,
- introducing a transfer medium (8) into the solid bed (11), which transfer medium increases the absorption of electromagnetic radiation,
- at least partial desorption and at least partial reaction of said at least one pollutant, and
- at least partial discharge (2) of the purified carrier gas and reaction products of the pollutant from the solid bed (11),
**characterized in that**
the transfer medium (8) is introduced discontinuously into the solid bed (11), a mass transport-coupled temperature pulse is initiated which travels through the solid bed (11),
and the gas mixture (3) is continuously fed into the solid bed (11), and the purified carrier gas (2) is continuously discharged from the solid bed (11).

2. The method as claimed in claim 1,
**characterized in that**
the reaction is an oxidation.

3. The method as claimed in any of the preceding claims,
**characterized in that**
the transfer medium is introduced at intervals into the solid bed (11).

4. The method as claimed in claim 3,
**characterized in that**
the transfer medium is introduced into the solid bed (11) at intervals of 2 to 60 minutes.

5. The method as claimed in any of the preceding claims,
**characterized in that**
introduction of the transfer medium (8) proceeds within a period of 90 s.

6. The method as claimed in any of the preceding claims,
**characterized in that**
the transfer medium is introduced into the solid bed (11) by means of direct injection.

7. The method as claimed in any of the preceding claims,
**characterized in that**
zeolite, γ-alumina, porous metal oxides, silica gel and/or activated carbon are used as adsorption-active component.

8. The method as claimed in any of the preceding claims,
**characterized in that**
a perovskite, an oxide, a transition metal and/or a noble metal is used as catalytically active component.

9. The method as claimed in any of the preceding claims,
**characterized in that**
water is used as transfer medium (8).

10. A device for carrying out the method as claimed in any of claims 1 to 9, said device having:
a solid bed (11) connected to a means for dielectrically heating the solid bed (11), said means for dielectrically heating the solid bed (11) being formed by at least one electrode (10, 12) suitable for dielectric heating and/or by a means for introducing microwaves, and the solid bed (11) having at least one adsorbing component and at least one catalytically active component, said solid bed (11) being connected to a means (3) for the inflow of a gas mixture into the solid bed (11), which gas mixture includes at least one carrier gas and at least one pollutant, and to a means (2) for the outflow of purified carrier gas and reaction products of the pollutant from the solid bed (11), the solid bed (11) being additionally connected to a means for discontinuously introducing a transfer medium (8) to initiate a heat and mass flow pulse traveling through the solid bed (11), **characterized in that** the gas mixture is continuously fed into the solid bed (11) and the purified carrier gas is continuously discharged from the solid bed (11).

11. The device as claimed in claim 10,
**characterized in that**
the device has a means for the periodic introduction of transfer medium (8).

12. The device as claimed in any of claims 10 to 11,
**characterized in that**
the means for introducing a transfer medium has an injection device for a liquid.

13. The device as claimed in any of claims 10 to 12,
**characterized in that**
at least one of the electrodes (10) suitable for dielectric heating is connected to a high-frequency generator (14).

14. The device as claimed in any of claims 10 to 13,
**characterized in that**
the means (3) for the inflow of a gas mixture has a metering device (5) and/or a gas analyzer (6) and/or a gas moisture sensor (7).

15. The device as claimed in any of claims 10 to 14,
**characterized in that**
the means (2) for the outflow of the gas mixture has a flow meter (4) and/or a gas analyzer (6) and/or a gas moisture sensor (7).

16. The device as claimed in any of claims 10 to 15,
**characterized in that**
the device has a temperature sensor (9) to measure the temperature of the solid bed (11) in the inflow area and/or in the outflow area.

17. The device as claimed in any of claims 10 to 16,
**characterized in that**
the device has means for determining the load of the solid bed (11) relative to the adsorption of pollutant.

## Revendications

1. Procédé de purification d'un mélange de gaz (3) qui contient au moins un gaz porteur et au moins une substance polluante, comprenant les étapes suivantes :
- introduction du mélange de gaz dans un lit de matière solide (11), moyennant quoi le lit de matière solide (11) contient au moins un composant ayant un effet adsorbant et au moins un composant ayant une action catalytique,
- adsorption de la au moins une substance polluante dans le lit de matière solide (11),
- échauffement diélectrique (10, 12) du lit de matière solide (11) au moyen d'un rayonnement électromagnétique, moyennant quoi, pour produire l'échauffement diélectrique, on utilise des ondes radio et/ou des micro-ondes dans une gamme comprise entre 100 kHz et 50 GHz,
- introduction d'un milieu de transmission (8) dans le lit de matière solide (11), moyennant quoi le milieu de transmission augmente l'absorption du rayonnement électromagnétique,
- désorption au moins partielle et réaction au moins partielle de la au moins une substance polluante, et
- évacuation (2) au moins partielle du gaz porteur purifié et des produits de réaction de la substance polluante à l'extérieur du lit de matière solide (11),
**caractérisé en ce que**
le milieu de transmission (8) est introduit de façon discontinue dans le lit de matière solide (11), une impulsion de température couplée à un transport de matière est initiée, qui parcoure le lit de matière solide (11),
le mélange de gaz (3) est introduit de manière continue dans le lit de matière solide (11) et le gaz porteur purifié (2) est évacué de façon continue du lit de matière solide (11).

2. Procédé selon la revendication 1,
**caractérisé en ce que**
la réaction est une oxydation.

3. Procédé selon l'une quelconque des revendications précédentes,
**caractérisé en ce que**
le milieu de transmission est introduit par intervalles dans le lit de matière solide (11).

4. Procédé selon la revendication 3,
**caractérisé en ce que**
le milieu de transmission est introduit toutes les 2 à 60 minutes dans le lit de matière solide (11).

5. Procédé selon l'une quelconque des revendications précédentes,
**caractérisé en ce que**
l'introduction du milieu de transmission (8) s'effectue pendant une durée de 90 s.

6. Procédé selon l'une quelconque des revendications précédentes,
**caractérisé en ce que**
le milieu de transmission est introduit par injection directe dans le lit de matière solide (11).

7. Procédé selon l'une quelconque des revendications précédentes,
**caractérisé en ce**
**qu'**on utilise à titre de composant ayant un effet adsorbant du zéolithe, de l'oxyde de γ-aluminium, des oxydes de métal poreux, du gel de silice et/ou du charbon actif.

8. Procédé selon l'une quelconque des revendications précédentes,
**caractérisé en ce**
**qu'**on utilise en tant que composant ayant une action catalytique un perowskit, un oxyde, un métal de transition et/ou un métal noble.

9. Procédé selon l'une quelconque des revendications précédentes,
**caractérisé en ce**
**qu'**on utilise de l'eau en tant que milieu de transmission (8).

10. Dispositif permettant d'exécuter le procédé selon l'une quelconque des revendications 1 à 9, comprenant :
un lit de matière solide (11) qui est relié à un moyen d'échauffement diélectrique du lit de matière solide (11),
dans lequel le moyen d'échauffement diélectrique du lit de matière solide (11) est constitué d'au moins une électrode (10, 12) appropriée pour un échauffement diélectrique et/ou d'un dispositif d'introduction de micro-ondes, et le lit de matière solide (11) comprend au moins un composant adsorbant et au moins un composant à action catalytique,
le lit de matière solide (11) est relié à un moyen (3) destiné à alimenter un mélange de gaz comprenant au moins un gaz porteur et au moins une substance polluante dans le lit de matière solide (11), et à un moyen (2) permettant d'évacuer du lit de matière solide (11) le gaz porteur purifié et les produits de réaction de la substance polluante,
dans lequel le lit de matière solide (11) est relié en plus à un moyen permettant une introduction discontinue d'un milieu de transmission (8) initiant une impulsion de chaleur et de circulation de matière parcourant le lit de matière solide (11),
**caractérisé en ce que**
le mélange de gaz est alimenté de façon continue dans le lit de matière solide (11) et le gaz porteur purifié est évacué de façon continue du lit de matière solide (11).

11. Dispositif selon la revendication 10,
**caractérisé en ce que**
le dispositif comprend un moyen d'introduction périodique du milieu de transmission (8).

12. Dispositif selon l'une quelconque des revendications 10 à 11,
**caractérisé en ce que**
le moyen d'introduction périodique d'un milieu de transmission comprend un dispositif d'injection de liquide.

13. Dispositif selon l'une quelconque des revendications 10 à 12,
**caractérisé en ce que**
au moins l'une des électrodes (10) appropriées pour l'échauffement diélectrique est reliée à un générateur de haute fréquence (14).

14. Dispositif selon l'une quelconque des revendications 10 à 13,
**caractérisé en ce que**
le moyen (3) d'alimentation d'un mélange de gaz comprend un appareil de distribution (5) et/ou un analyseur de gaz (6) et/ou un détecteur d'humidité de gaz (7).

15. Dispositif selon l'une quelconque des revendications 10 à 14,
**caractérisé en ce que**
le moyen (2) d'évacuation du mélange de gaz comprend un débitmètre (4) et/ou un analyseur de gaz (6) et/ou un détecteur d'humidité de gaz (7).

16. Dispositif selon l'une quelconque des revendications 10 à 15,
**caractérisé en ce que**
le dispositif comprend une sonde de température (9) destinée à mesurer la température du lit de matière solide (11) dans la zone d'alimentation et/ou dans la zone d'effluent.

17. Dispositif selon l'une quelconque des revendications 10 à 16,
**caractérisé en ce que**
le dispositif comprend un moyen destiné à déterminer la charge du lit de matière solide (11) afférente à l'adsorption de la substance polluante.
